# EUROPEAN PATENT APPLICATION

(11) **EP 4 851 473 A1**
(43) Date of publication of application: **09.12.2026**
(21) Application number: 25748305.7
(22) Date of filing: 23.01.2025
(51) Int. Cl.: F16C 33/374, F16C 19/06, F16C 33/66, H02K 7/08, H02K 7/116

(54) **BALL BEARING**

(30) Priority: 01.02.2024 JP 2024014200
(71) Applicant: NTN Corporation, Osaka-shi, Osaka 530-0005 (JP)
(72) Inventor: SASAKI, Katsuaki, Iwata-shi, Shizuoka 438-8510 (JP); MIYAIRI, Susumu, Iwata-shi, Shizuoka 438-8510 (JP)
(74) Representative: Grünecker Patent- und Rechtsanwälte PartG mbB
(86) International application number: PCT/JP2025/002050
(87) International publication number: WO 2025/164497

(57) **Abstract**

A ball bearing is provided in which the axial thickness a (mm) of each inter-pocket portion (17) of a cage circular annular portion (11) is set to satisfy a < c with respect to the axial distance c (mm) from the side surface (19) of the cage circular annular portion (11) on one axial side to the center (O) of each ball (5), and an inter-ball circumferential length ratio r defined as r = (dm×π÷Z)/Da is set to 2.6 or more and 11.4 or less, where the pitch circle diameter of the balls (5) is dm (mm), the number of the balls (5) is Z (pieces), and the diameter of each ball (5) is Da (mm).

## Description

### TECHNICAL FIELD

The present invention relates to a ball bearing.

### BACKGROUND ART

As bearings used in a high-speed rotation range, e.g., bearings that support a rotary shaft of an electric motor of an electric vehicle, ball bearings of the below-identified Patent Documents 1 and 2 are known.

The ball bearings of Patent Documents 1 and 2 each include an outer ring having an outer ring raceway surface on its inner periphery; an inner ring having an inner ring raceway surface on its outer periphery; a plurality of balls kept in rolling contact with the outer ring raceway surface and the inner ring raceway surface; and a cage retaining the balls. The cage includes a cage circular annular portion circumferentially extending on one axial side relative to the balls; and a plurality of pairs of cage claws extending from the cage circular annular portion toward the other axial side. Pockets are formed between the respective pairs of cage claws and receive the respective balls. The balls are arranged at circumferential intervals in an annular bearing space defined between the inner periphery of the outer ring and the outer periphery of the inner ring.

The ball bearings of Patent Documents 1 and 2 are used under oil lubrication. That is, in each ball bearing of Patent Documents 1 and 2, the bearing space between the outer ring and the inner ring is not sealed with a sealing member or the like, and is open to the outside of the bearing. Furthermore, lubricating oil supplied from the outside of the bearing during rotation of the bearing is introduced into the bearing space, and the bearing rotates while lubricating the inside of the bearing with the lubricating oil. [

### PRIOR ART DOCUMENT(S)

### PATENT DOCUMENT(S)

Patent Document 1: Japanese Patent No. 5703894
Patent Document 2: Japanese Patent No. 4626183

### SUMMARY OF THE INVENTION

### PROBLEMS TO BE SOLVED BY THE INVENTION

When the above-described ball bearing is used in a high-speed rotation range in which a dmn value (pitch circle diameter dm (mm) of the ball × rotation speed n (min-1)) is 650,000 or more, the balls and the cage rotate at a high speed, so that the air in the bearing space between the outer ring and the inner ring circumferentially moves at a high speed, whereby an air curtain is generated. As a result, the air curtain makes it difficult for the lubricating oil supplied from the outside of the bearing to enter the bearing space, so that starvation (depletion of lubricating oil inside the bearing) could occur.

If the ball bearing is used to support a main shaft or the like of a machine tool, it is possible to prevent starvation by increasing the amount of lubricating oil supplied to the ball bearing. However, in the case of, for example, a ball bearing that supports a rotary shaft of an electric motor for traveling an electricvehicle or a ball bearing that supports a rotary shaft of a unit (e-Axle) in which an electric motor and a speed reducer are integrated, it is difficult to increase the amount of lubricating oil supplied to the ball bearing.

It is an object of the present invention to provide a ball bearing in which starvation is less likely to occur when the ball bearing is used in a high-speed rotation range.

### MEANS FOR SOLVING THE PROBLEMS

The inventors of the present application have focused on the following point. Especially at the contact portions between the balls and the inner ring raceway surface, lubricating oil is likely to become insufficient when the ball bearing is used in a high-speed rotation range. That is, when the ball bearing rotates at a high speed, the lubricating oil supplied from the outside of the bearing to the bearing space is likely to move radially outward due to the action of a centrifugal force. In addition, the contact portions between the balls and the inner ring raceway surface are located on the radially innermost side in the bearing space. Therefore, the contact portions between the balls and the inner ring raceway surface are less likely to receive the lubricating oil supplied from the outside of the bearing compared to other portions. Therefore, the inventors of the present application have focused on the following point. At the contact portions between the balls and the inner ring raceway surface, lubricating oil is likely to become insufficient when the ball bearing is used in the high-speed rotation range; therefore, if the contact portions between the balls and the inner ring raceway surface can be effectively lubricated, the starvation in the high-speed rotation range can be effectively prevented.

Based on the above points, in order to achieve the above object, the present invention provides the following ball bearing.

### [Arrangement 1]

A ball bearing comprising: an outer ring having an outer ring raceway surface on an inner periphery of the outer ring; an inner ring having an inner ring raceway surface on an outer periphery of the inner ring; a plurality of balls disposed at circumferential intervals in an annular bearing space defined between the outer ring and the inner ring, the plurality of balls being in rolling contact with the outer ring raceway surface and the inner ring raceway surface; and a cage retaining the balls, wherein the bearing space communicates with an outside of the bearing such that a lubricating oil is introduced into the bearing space from the outside of the bearing, wherein the cage includes: a cage circular annular portion circumferentially extending on a first axial side relative to the balls; and a plurality of pairs of cage claws extending from the cage circular annular portion to a second axial side, and wherein pockets are formed between the respective pairs of cage claws such that the balls are received in the respective pockets, characterized in that an axial thickness a (mm) of a portion of the cage circular annular portion connecting together ones of the cage claws that are located between each circumferentially adjacent pair of the pockets is set to satisfy a < c with respect to an axial distance c (mm) from a side surface of the cage circular annular portion on the first axial side to a center of each of the balls, wherein an inter-ball circumferential length ratio r defined as r = (dm×π÷Z)/Da is set to 2.6 or more and 11.4 or less, where a pitch circle diameter of the balls is dm (mm), the number of the balls is Z (pieces), and a diameter of each of the balls is Da (mm).

With this arrangement, the circumferential interval between each circumferentially adjacent pairs of balls is long, and the axial thickness of the portion of the cage circular annular portion connecting together the cage claws that are located between each circumferentially adjacent pair of the pockets is thin; therefore, when seen from the radial outer side, the portion of the inner ring raceway surface covered with the cage is small. Therefore, the lubricating oil supplied from the outside of the bearing easily reaches the contact portions between the balls and the inner ring raceway surface.

In addition, since the circumferential interval between each circumferentially adjacent pair of balls is long, a time interval during which each ball passes through the same position on the inner ring raceway surface is long. Therefore, insufficient lubrication of the contact portions between the balls and the inner ring raceway surface is less likely to occur. That is, when one of the balls rolls on the inner ring raceway surface, the lubricating oil that is present on the inner ring raceway surface is scraped and separated by the ball. Thereafter, when the next ball rolls on the same position on the inner ring raceway surface before the amount of the lubricating oil that is present on the inner ring raceway surface is recovered, the ball and the inner ring raceway surface could come into direct contact with each other with no lubricating oil interposed therebetween. If the circumferential interval between each circumferentially adjacent pair of balls is lengthened to address the above problem, the time interval during which each ball passes through the same position on the inner ring raceway surface is lengthened. Therefore, the amount of the lubricating oil that is present on the inner ring raceway surface is easily recovered after one of the balls rolls on the inner ring raceway surface and scrapes and separates the lubricating oil that is present on the inner ring raceway surface and until the next ball rolls on the same position on the inner ring raceway surface. Therefore, a situation is less likely to occur in which the balls and the inner ring raceway surface come into direct contact with each other with no lubricating oil interposed therebetween, and thus insufficient lubrication of the contact portions between the balls and the inner ring raceway surface is less likely to occur.

In addition, since the circumferential intervals between the respective circumferentially adjacent pairs of balls are long, the gaps in the bearing through which lubricating oil can axially pass (gaps in which the lubricating oil supplied from the outside of the bearing can axially pass through the bearing space between the outer ring and the inner ring while avoiding the balls and the cage) are large. Therefore, even when the ball bearing is used in a high-speed rotation range, the amount of the lubricating oil passing through the bearing space is large, and it is possible to easily ensure the amount of the lubricating oil that lubricates the contact portions between the balls and the inner ring raceway surface.

Due to the synergistic effect of the above actions, the contact portions between the balls and the inner ring raceway surface can be effectively lubricated with the lubricating oil supplied from the outside of the bearing, and the starvation in a high-speed rotation range can be effectively prevented.

With the above arrangement, the number of balls is small; therefore, the number of cage claws is also small. Therefore, when the ball bearing is used in a high-speed rotation range, it is possible to reduce deformation of the cage in which the pairs of cage claws are inclined radially outward by a centrifugal force. That is, there is the following problem. When the cage rotates at a high speed, a centrifugal force acts on each pair of cage claws axially extending from the cage circular annular portion. Therefore, the cage circular annular portion is torsionally deformed by the forces transmitted from the cage claws, and as a result, the entire cage is deformed such that each pair of cage claws are inclined radially outward. Furthermore, when the deformation of the cage becomes large, the cage claws interfere with the balls, and this could cause abnormal heat generation. If the circumferential interval between each circumferentially adjacent pair of balls is lengthened to address the above problem, the number of balls decreases, and the number of cage claws also decreases. Therefore, when the cage rotates at a high speed, the total of the centrifugal forces acting on the plurality of pairs of cage claws decreases, and the torsional deformation of the cage circular annular portion caused by the forces transmitted from the cage claws also decreases. Therefore, when the ball bearing is used in a high-speed rotation range, it is possible to reduce deformation of the cage in which each pair of cage claws are inclined radially outward by a centrifugal force.

### [Arrangement 2]

The ball bearing according to arrangement 1, wherein the axial thickness a (mm) of the portion of the cage circular annular portion connecting together the ones of the cage claws that are located between each circumferentially adjacent pair of the pockets is set to satisfy a > b with respect to an axial thickness b (mm) of a portion of the cage circular annular portion corresponding to a bottom of each of the pockets.

With this arrangement, it is possible to ensure the strength of the cage circular annular portion.

### [Arrangement 3]

The ball bearing according to arrangement 1 or 2, wherein the inner ring has, on the outer periphery of the inner ring, a cylindrical inner ring shoulder surface that is axially adjacent to the inner ring raceway surface, and that is radially opposed to an inner periphery of the cage circular annular portion, and wherein an annular oil passage gap through which a lubricating oil passes is formed between the inner periphery of the cage circular annular portion and the inner ring shoulder surface.

With this arrangement, the oil passage gap is formed at a position close to the inner ring raceway surface (formed between the inner periphery of the cage circular annular portion and the inner ring shoulder surface); therefore, it is possible to effectively lubricate the contact portions between the balls and the inner ring raceway surface.

### [Arrangement 4]

The ball bearing according to any one of arrangements 1 to 3, wherein the portion of the cage circular annular portion connecting together the ones of the cage claws that are located between each circumferentially adjacent pair of the pockets has, on the second axial side, a side surface that is a flat surface perpendicular to an axial direction.

With this arrangement, since the portion of the cage circular annular portion connecting together the ones of the cage claws that are located between each circumferentially adjacent pair of the pockets has, on the second axial side, a side surface that is a flat surface perpendicular to an axial direction, air existing in the space between each circumferentially adjacent pair of balls is less likely to be stirred by circumferential movement of the cage circular annular portion. Therefore, the lubricating oil existing in the bearing space easily reaches the contact portions between the balls and the inner ring raceway surface.

### [Arrangement 5]

The ball bearing according to any one of arrangements 1 to 4, wherein each of the pockets has, on an inner surface of the pocket, an oil passage groove radially extending at an axial position corresponding to the center of the ball.

With this arrangement, lubricating oil can be introduced into the oil passage groove in the inner surface of each of the pockets of the cage, and the contact portions between the cage and the balls can be effectively lubricated with the lubricating oil.

### [Arrangement 6]

The ball bearing according to any one of arrangements 1 to 5, wherein the axial thickness b (mm) of the portion of the cage circular annular portion corresponding to the bottom of each of the pockets is set to 1/62 or more and 1/26 or less of the pitch circle diameter dm (mm) of the balls.

### [Arrangement 7]

The ball bearing according to any one of arrangements 1 to 6, wherein the axial thicknesses a (mm) of the portion of the cage circular annular portion connecting together the ones of the cage claws that are located between each circumferentially adjacent pair of the pockets is set to 1/70 or more and 1/30 or less of the pitch circle diameter dm (mm) of the balls.

### [Arrangement 8]

The ball bearing according to any one of arrangements 1 to 7, wherein the cage is formed of a resin composition in which a fiber-reinforced material is added to a resin material comprising one of a polyamide resin, a polyether ether ketone resin, and a polyphenylene sulfide resin.

### [Arrangement 9]

The ball bearing according to any one of arrangements 1 to 7, wherein the cage is formed of mild steel.

### [Arrangement 10]

The ball bearing of each of the above arrangements is suitably used as a bearing that supports a rotary shaft of an electric motor for traveling an electric vehicle or as a bearing that supports a rotary shaft of a speed reducer configured to reduce rotation speed of the electric motor.

That is, the bearing that supports the rotary shaft of the electric motor for traveling an electric vehicle or the bearing that supports the rotary shaft of the speed reducer that reduces the rotation speed of the electric motor rotates at a very high speed, but a load supported by the bearing itself is very small (for example, several percents or smaller) as compared with a basic dynamic rated load of a standard ball bearing; therefore, the number of the balls can be reduced. Therefore, it is particularly suitable to use the ball bearing according to the present invention.

### EFFECTS OF THE INVENTION

With respect to the ball bearing of the present invention, the contact portions between the balls and the inner ring raceway surface can be effectively lubricated with the lubricating oil supplied from the outside of the bearing, and starvation in a high-speed rotation range can be effectively prevented.

### BRIEF DESCRIPTION OF THE DRAWINGS

Fig. 1 is a view of a ball bearing according to an embodiment of the present invention when seen in the axial direction.
Fig. 2 is a sectional view taken along line II-II in Fig. 1.
Fig. 3 is a partial sectional view illustrating a pocket of a cage illustrated in Fig. 2 and its vicinity when seen from the radially outer side.
Fig. 4 is a perspective view of a cage illustrated in Fig. 1.
Fig. 5 is a view schematically illustrating a usage example in which ball bearings as illustrated in Fig. 1 are disposed in a driving device for traveling an electric vehicle.
Fig. 6 is a view illustrating an example of a standard ball bearing.

### BEST MODE FOR CARRYING OUT THE INVENTION

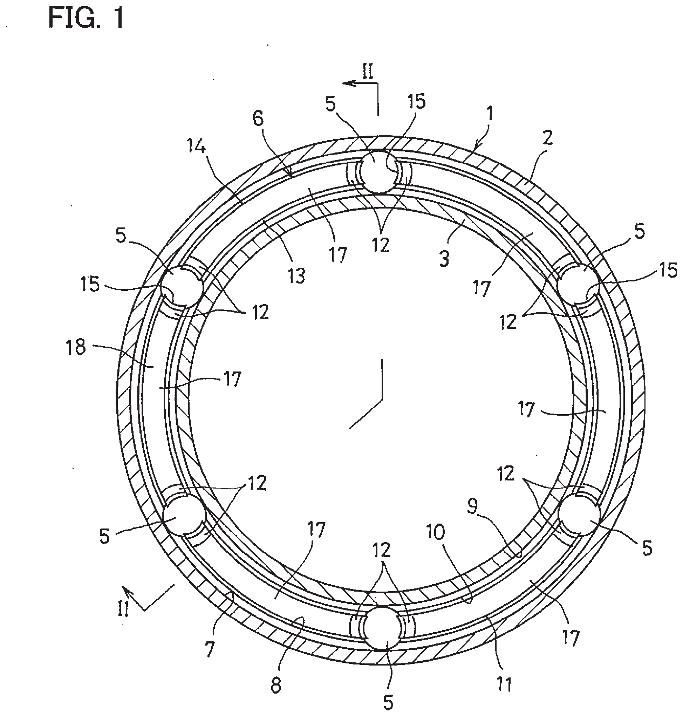

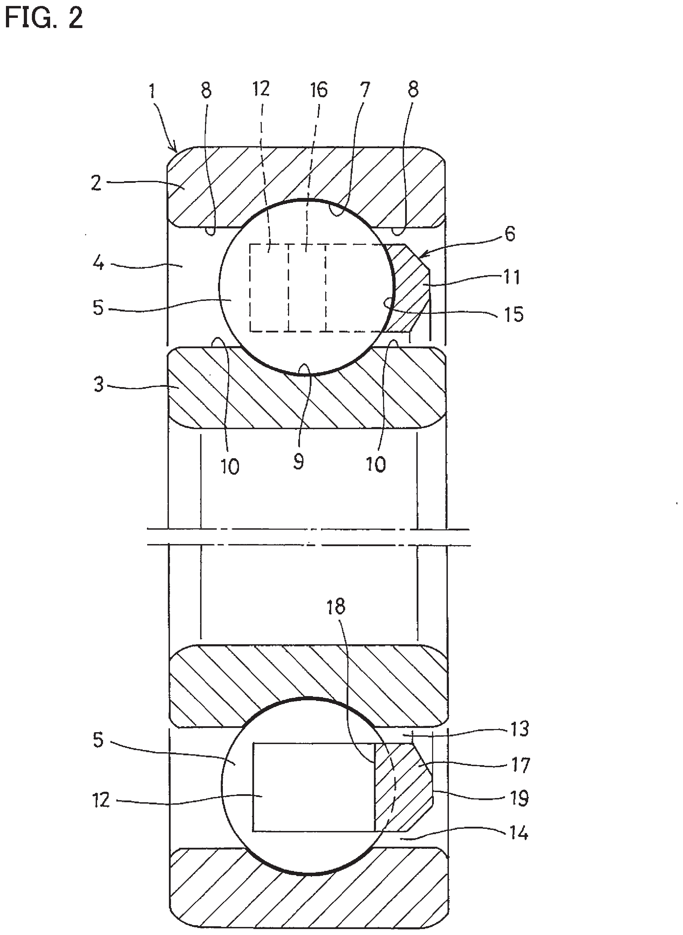

Fig. 1 illustrates a ball bearing 1 according to an embodiment of the present invention. The ball bearing 1 includes an outer ring 2; an inner ring 3 arranged radially inward of and coaxially with the outer ring 2; a plurality of balls 5 disposed at circumferentially regular intervals in an annular bearing space 4 (see Fig. 2) defined between the outer ring 2 and the inner ring 3; and a cage 6 that retains the balls 5.

The direction parallel to the center axis of the outer ring 2 (center axis of the bearing) is referred to as the "axial direction", "axial", or "axially". The direction orthogonal to the center axis of the outer ring 2 is referred to as the "radial direction", "radial", or "radially". The direction around the center axis of the outer ring 2 is referred to as the "circumferential direction", "circumferential", or "circumferentially".

As shown in Fig. 2, the outer ring 2 has, on its inner periphery, an outer ring raceway surface 7 with which the balls 5 come into rolling contact; and a pair of outer ring shoulder surfaces 8 circumferentially extending on both sides of the outer ring raceway surface 7 and axially adjacent to the outer ring raceway surface 7. The outer ring raceway surface 7 is the inner surface of a groove having a circular arc-shaped cross section and circumferentially extending on the inner periphery of the outer ring 2. The outer ring shoulder surfaces 8 are cylindrical surfaces having a constant inner diameter along the axial direction. The outer diameter of the outer ring 2 is set to 60 mm or more and 110 mm or less.

The inner ring 3 has, on its outer periphery, an inner ring raceway surface 9 with which the balls 5 come into rolling contact; and a pair of inner ring shoulder surfaces 10 circumferentially extending on both sides of the inner ring raceway surface 9 and axially adjacent to the inner ring raceway surface 9. The inner ring raceway surface 9 is the outer surface of a groove having a circular arc-shaped cross section and circumferentially extending on the outer periphery of the inner ring 3. The inner ring shoulder surfaces 10 are cylindrical surfaces having a constant outer diameter along the axial direction. The inner diameter of the inner ring 3 is set to 35 mm or more and 80 mm or less.

The balls 5 are in rolling contact with the outer ring raceway surface 7 and the inner ring raceway surface 9. The outer ring raceway surface 7 is formed symmetrically with respect to the axial center of the outer ring 2 , and the inner ring raceway surface 9 is also formed symmetrically with respect to the axial center of the inner ring 3. The ball bearing 1 is a deep groove ball bearing.

Neither of both axial sides of the bearing space 4 between the outer ring 2 and the inner ring 3 is sealed with a sealing member or the like, and the bearing space 4 communicates with the outside of the bearing. That is, the bearing space 4 between the outer ring 2 and the inner ring 3 communicates with the external spaces on both axial sides of the bearing space 4so that lubricating oil supplied from the outside of the bearing during rotation of the bearing can be introduced into the bearing space 4 between the outer ring 2 and the inner ring 3 so as to lubricate the interior of the bearing.

The cage 6 includes a cage circular annular portion 11 circumferentially extending on one axial side relative to the balls 5 (right side in the drawing); and a plurality of cage claws 12 extending from the cage circular annular portion 11 toward the other axial side (left side in the drawing) so as to be located between the respective circumferentially adjacent pairs of balls 5. Each cage claw 12 has a cantilevered structure in which one axial end of the cage claw 12 (end thereof on the right side in the drawing) is a fixed end fixed to the cage circular annular portion 11 and the other axial end of the cage claw 12 (end thereof on the left side in the drawing) is a free end. The cage circular annular portion 11 and the cage claws 12 comprise a seamless integral member formed of a resin composition in which a fiber-reinforced material is added to a resin material.

As the resin material constituting the resin composition, a polyamide resin (PA), a polyether ether ketone resin (PEEK), or a polyphenylene sulfide resin (PPS) can be used. As the polyamide resin (PA), it is possible to use polyamide 46 (PA46), polyamide 66 (PA66), polynonamethylene terephthalamide (PA9T), or the like. As the fiber-reinforced material added to the resin material, it is possible to use glass fiber, carbon fiber, aramid fiber, or the like. The fiber-reinforced material is blended in a proportion of 10 to 50 wt% of the resin composition forming the cage 6.

The inner periphery of the cage circular annular portion 11 is radially opposed to the inner ring shoulder surface 10 on the one axial side (right side in the drawing). An annular oil passage gap 13 through which lubricating oil supplied from the outside of the bearing passes is defined between the inner periphery of the cage circular annular portion 11 and the inner ring shoulder surface 10. The radial width of the oil passage gap 13 is set to 5% or more of the diameter of each ball 5. An annular second oil passage gap 14 through which lubricating oil passes is also defined between the outer periphery of the cage circular annular portion 11 and the outer ring shoulder surface 8 on the one axial side (right side in the drawing).

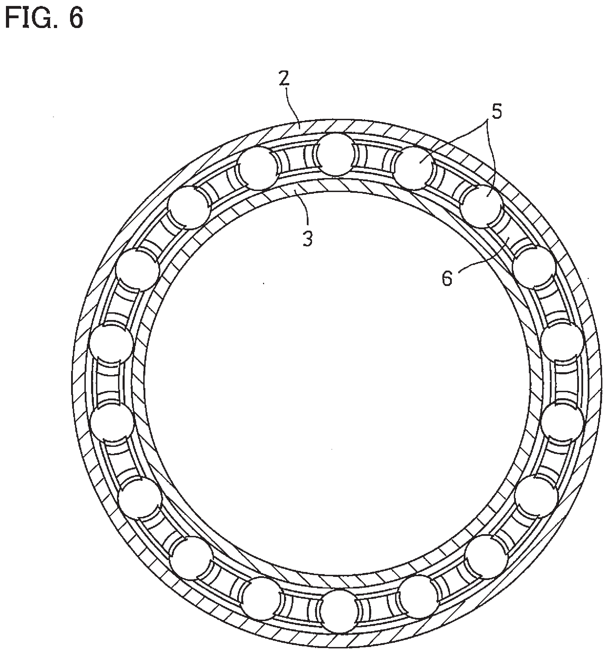

As illustrated in Fig. 1, the cage claws 12 are provided as a plurality of pairs (six pairs in the drawing) of cage claws corresponding to the plurality of balls 5. The number of the pairs of cage claws 12 is equal to the number of the balls 5 (six in the drawing). The distance between the centers of each circumferentially adjacent pair of balls 5 is larger than the distance between the centers of each circumferentially adjacent pair of balls 5 of a standard ball bearing (general ball bearing having dimensions specified in Japanese Industrial Standard JIS B 1512-1 " Rolling bearings - Main dimensions - Part 1: Radial bearing"). Specifically, when the pitch circle diameter of the balls 5, the number of the balls 5, and the diameter of each ball 5 are denoted, respectively, by dm (mm), Z (pieces), and Da (mm), an inter-ball circumferential length ratio r defined by r = (dm×π÷Z)/Da is set to 2.6 or more (preferably 4.3 or more, more preferably 5.7 or more) and 11.4 or less. The pitch circle diameter dm (mm) of the balls 5 is the diameter of an imaginary circle connecting the centers O of the balls 5. The pitch circle diameter dm (mm) is equal to the intermediate value between the outer diameter of the outer ring 2 and the inner diameter of the inner ring 3. The inter-ball circumferential length ratio r of the ball bearing of a standard product as illustrated in Fig. 6 is about 1.8. If the ratio r is less than 2.6, it is difficult to ensure lubricity during high-speed rotation. If the ratio r is more than 11.4, the circumferential interval of the balls 5 is too large, and the bearing could break up.

For example, in the case of the ball bearing 1 of a standard product in which the outer ring 2 has an outer diameter of 90 mm and the inner ring 3 has an inner diameter of 65 mm (specifically, in the case of a ball bearing of nominal number of 6913, the pitch circle diameter dm = 77.5 (mm), the diameter Da of each ball 5 = 9/32 inch = 7.14375 (mm)), the number Z of the balls 5 is 19. If the present invention is applied to the ball bearing 1 having the same dimension as described above, the number Z of the balls 5 can be set to 13 or less (r = 2.6 or more), preferably 8 or less (r = 4.3 or more), and more preferably 6 or less (r = 5.7 or more).

Similarly, in the case of the ball bearing 1 of a standard product in which the outer ring 2 has an outer diameter of 110 mm and the inner ring 3 has an inner diameter of 80 mm (specifically, in the case of a ball bearing of nominal number of 6916, the pitch circle diameter dm = 95.5 (mm), the diameter Da of each ball 5 = 11/32 inch = 8.73125 (mm)), the number Z of the balls 5 is 19. If the present invention is applied to the ball bearing 1 having the same dimension as described above, the number Z of the balls 5 can be set to 13 or less (r = 2.6 or more) and preferably 8 or less (r = 4.3 or more).

Furthermore, in the case of the ball bearing 1 of a standard product in which the outer ring 2 has an outer diameter of 62 mm and the inner ring 3 has an inner diameter of 40 mm (specifically, in the case of a ball bearing of nominal number of 6908, the pitch circle diameter dm = 51 (mm), the diameter Da of each ball 5 = 1/4 inch = 6.35 (mm)), the number Z of the balls 5 is 14. If the present invention is applied to the ball bearing 1 having the same dimension as described above, the number Z of the balls 5 can be set to 9 or less (r = 2.8 or more) and preferably 6 or less (r = 3.2 or more).

As described above, the present invention can be applied to, for example, ball bearings whose bearing series numbers defined in Japanese Industrial Standard JIS B 1513-1995 "Rolling bearings - Designation" are 67, 68, 69, 60, 62, 63, and 64 and whose inner rings 3 have an inner diameter of 30 mm to 90 mm.

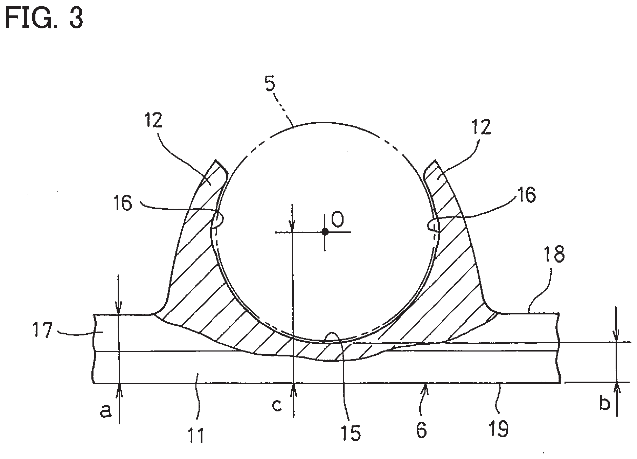

As illustrated in Fig. 3, pockets 15 are formed between the respective pairs of cage claws 12, and receive the respective balls 5. The inner surface of each pocket 15 (surfaces of the cage claws 12 and the cage circular annular portion 11 opposed to the surface of the ball 5) is a concave spherical surface along the surface of the ball 5. Each pocket 15 has, on its inner surface, oil passage grooves 16 extending in the radial direction (direction perpendicular to the paper surface in the drawing) at axial positions (vertical positions in the drawing) corresponding to the center O of the ball 5.

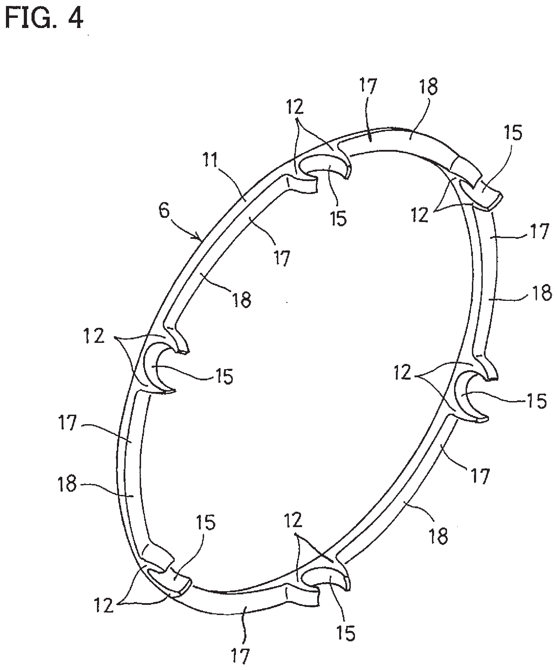

As illustrated in Figs. 1 and 4, the cage circular annular portion 11 incudes a portion connecting together the cage claws 12 between each circumferentially adjacent pair of pockets 15, specifically, a portion (hereinafter referred to as the "inter-pocket portion 17") connecting together (i) the cage claw 12 on the other circumferential side (right side in the case of the upper portion in the drawing) of the pair of cage claws 12 defining the pocket 15 on one circumferential side (left side in the case of the upper portion in the drawing) of each adjacent pair of pockets 15 in the circumferential direction (left-right direction in the case of the upper part of the drawing), and (ii) the cage claw 12 on the one circumferential side (left side in the case of the upper portion in the drawing) of the pair of cage claws 12 defining the pocket 15 on the other circumferential side (right side in the case of the upper portion in the drawing). The above portions (inter-pocket portions 17) of the cage circular annular portion 11 have a constant axial thickness and have a flat plate shape extending in the circumferential direction.

As illustrated in Fig. 2, the side surface 18 of each inter-pocket portion 17 of the cage circular annular portion 11 on the other axial side (left side in the drawing) is a flat surface perpendicular to the axial direction. The side surface 18 of each inter-pocket portion 17 of the cage circular annular portion 11 on the other axial side (left side in the drawing) is formed at a position corresponding to the axial position of the end of the inner ring raceway surface 9 on the one axial side (right side in the drawing). Specifically, the inter-pocket portions 17 of the cage circular annular portion 11 are each formed such that the axial displacement between the axial position of the side surface 18 of the inter-pocket portion 17 of the cage circular annular portion 11 on the other axial side (left side in the drawing) and the axial position of the end of the inner ring raceway surface 9 on the one axial side (right side in the drawing) is within 5% of the diameter of the ball 5.

As illustrated in Fig. 3, the axial thickness a (mm) of each inter-pocket portion 17 of the cage circular annular portion 11 is set to satisfy a > b and a < c with respect to the axial thickness b (mm) of the portion of the cage circular annular portion 11 corresponding to the bottom of the pocket 15 and the axial distance c (mm) from the side surface 19 of the cage circular annular portion 11 on the one axial side (lower side in the drawing), to the center O of the ball 5.

In addition, the axial thickness a (mm) of each inter-pocket portion 17 of the cage circular annular portion 11 is set to 1/70 or more and 1/30 or less of the pitch circle diameter dm (mm) of the balls 5, and the axial thickness b (mm) of the portion of the cage circular annular portion 11 corresponding to the bottom of each pocket 15 is set to 1/62 or more and 1/26 or less of the pitch circle diameter dm (mm) of the balls 5.

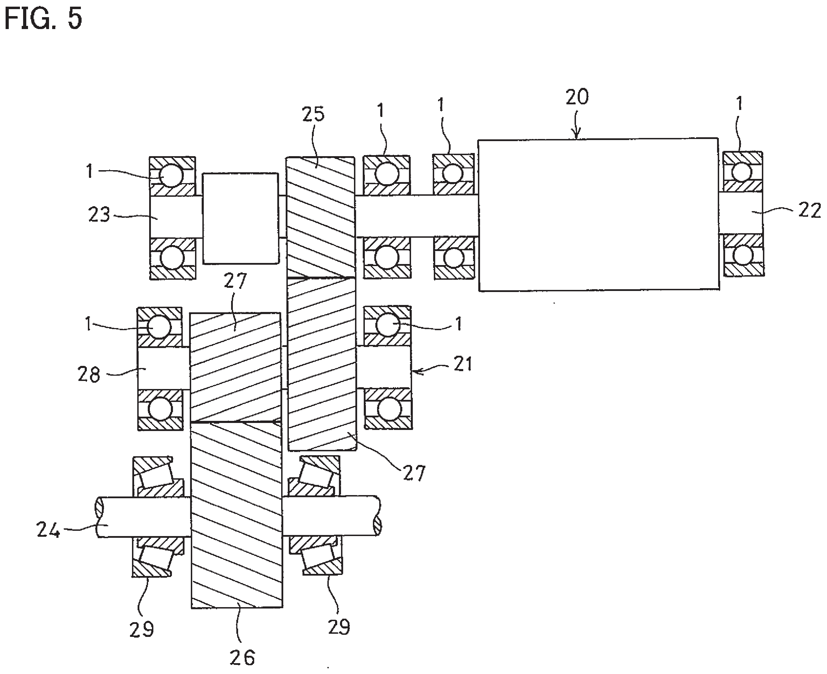

Fig. 5 illustrates a driving device (e-Axle) for traveling an electric vehicle in which ball bearings 1 as described above are used. This driving device is a unit in which an electric motor 20 for traveling an electric vehicle such as an EV (battery-type electric vehicle) or an HEV (hybrid electric vehicle) is integrated with a speed reducer 21 that reduces the rotation speed of the electric motor 20.

The driving device includes an electric motor 20 including a rotor shaft 22; an input shaft 23 of the speed reducer 21 to which rotation of the rotor shaft 22 is input; an output shaft 24 of the speed reducer 21; an input gear 25 fixed to the input shaft 23; an output gear 26 fixed to the output shaft 24; an intermediate gear 27 that reduces the rotation speed of the input gear 25 and transmits the reduced rotation to the output gear 26; and an intermediate shaft 28 fixed to the intermediate gear 27 so as to rotate in unison with the intermediate gear 27.

The rotor shaft 22 is a drive shaft that is rotationally driven by the electric motor 20. The output shaft 24 of the speed reducer 21 is connected to a wheel (not shown) of an electric vehicle. The input shaft 23, the intermediate shaft 28, and the output shaft 24 extend parallel to each other so as to be spaced apart from each other. The input gear 25, the intermediate gear 27, and the output gear 26 are helical gears. This driving device reduces the rotation speed of the electric motor 20 by sequentially transmitting the rotation to the input gear 25, the intermediate gear 27, and the output gear 26, and then outputs the reduced rotation from the output shaft 24 to vehicle wheels (not shown).

The rotor shaft 22, the input shaft 23, and the intermediate shaft 28 are rotatably supported by ball bearings 1 of this embodiment. On the other hand, the output shaft 24 is rotatably supported by tapered roller bearings 29. Lubricating oil is continuously supplied to the ball bearings 1from the outsides of the bearings during rotation of the bearings, and the lubricating oil lubricates the ball bearings 1. The supply of the lubricating oil to the ball bearings 1 can be performed by a method such as (i) a splash lubrication method in which lubricating oil is splashed up by the rotation of the output gear 26, thereby splashing the splashes of the lubricating oil onto the ball bearings 1, (ii) a jet lubrication method in which lubricating oil pressure-fed from an oil pump (not shown) is injected from a nozzle to the ball bearings 1, or (iii) an air-oil lubrication method in which lubricating oil is injected from a nozzle to the ball bearings 1 in a state of being mixed in compressed air.

When the ball bearing 1 illustrated in Fig. 2 is used in a high-speed rotation range in which the dmn value (the pitch circle diameter dm (mm) of the balls 5 × the rotation speed n (min-1)) is 650,000 or more (in some cases, 800,000 or more), the balls 5 and the cage 6 rotate at a high speed; therefore, the air in the bearing space 4 between the outer ring 2 and the inner ring 3 circumferentially moves at a high speed, so that an air curtain is generated. Therefore, there is the following problem: the air curtain makes it difficult for the lubricating oil supplied from the outside of the bearing to enter the bearing space 4, so that starvation (depletion of lubricating oil inside the bearing) could occur.

In the case of a ball bearing 1 that supports a main shaft or the like of a machine tool, it is possible to prevent starvation by increasing the amount of the lubricating oil supplied to the ball bearing 1. However, in the case of a ball bearing 1 used in the driving device (e-Axle) for traveling an electric vehicle as illustrated in Fig. 5, it is difficult to increase the amount of the lubricating oil supplied to the ball bearing 1.

A further consideration of the above problem reveals the following fact. When the ball bearing 1 illustrated in Fig. 2 rotates at a high speed, the lubricating oil supplied from the outside of the bearing to the bearing space 4 easily moves radially outward due to an action of a centrifugal force. In addition, the contact portions between the balls 5 and the inner ring raceway surface 9 are located on the radially innermost side in the bearing space 4; therefore, the lubricating oil supplied from the outside of the bearing is less likely to reach the contact portions between the balls 5 and the inner ring raceway surface 9 compared to other portions. Therefore, since, when the ball bearing 1 is used in a high-speed rotation range, lubricating is likely to become insufficient especially at the contact portions between the balls 5 and the inner ring raceway surface 9, if the contact portions between the balls 5 and the inner ring raceway surface 9 can be effectively lubricated, the starvation in the high-speed rotation range can be effectively prevented.

In order to address the above problem, in the ball bearing 1 of this embodiment, the circumferential interval/distance between each circumferentially adjacent pair of balls 5 is lengthened as illustrated in Fig. 1, and the axial thickness of each inter-pocket portion 17 of the cage circular annular portion 11 is made thin as illustrated in Fig. 2, so that when seen from the radially outer side, the portion of the inner ring raceway surface 9 covered with the cage 6 is small As a result, the lubricating oil supplied from the outside of the bearing easily reaches the contact portions between the balls 5 and the inner ring raceway surface 9.

Further, since, as shown in Fig. 1, the circumferential interval/distance between each circumferentially adjacent pair of balls 5 is long, the time interval during which the balls 5 illustrated in Fig. 2 pass through the same position on the inner ring raceway surface 9 is long. Therefore, insufficient lubrication is less likely to occur at the contact portions between the balls 5 and the inner ring raceway surface 9.

That is, when one of the balls 5 illustrated in Fig. 2 rolls on the inner ring raceway surface 9, the lubricating oil that is present on the inner ring raceway surface 9 is scraped and separated by the ball 5. Thereafter, when the next ball 5 rolls on the same position on the inner ring raceway surface 9 before the amount of the lubricating oil that is present on the inner ring raceway surface 9 is recovered, the ball 5 and the inner ring raceway surface 9 could come into direct contact with each other with no lubricating oil interposed therebetween. In order to address this problem, in this embodiment, since, as illustrated in Fig. 1, the circumferential interval/distance between each circumferentially adjacent pair of balls 5 is long, the time interval during which the balls 5 illustrated in Fig. 2 pass through the same position on the inner ring raceway surface 9 is long. Therefore, the amount of lubricating oil that is present on the inner ring raceway surface 9 is easily recovered in the period after one of the balls 5 rolls on the inner ring raceway surface 9 and scrapes and separates the lubricating oil that is present on the inner ring raceway surface 9 and until the next ball 5 rolls on the same position on the inner ring raceway surface 9. Therefore, a situation is less likely to occur in which the balls 5 and the inner ring raceway surface 9 come into direct contact with each other with no lubricating oil interposed therebetween, and thus insufficient lubrication of the contact portions between the balls 5 and the inner ring raceway surface 9 is less likely to occur.

In addition, since the circumferential intervals/distances between the respective circumferentially adjacent pairs of balls 5 are long as illustrated in Fig. 1, the gaps in the bearing through which lubricating oil can axially pass (gaps in which the lubricating oil supplied from the outside of the bearing can axially pass through the bearing space 4 between the outer ring 2 and the inner ring 3 while avoiding the balls 5 and the cage 6 illustrated in Fig. 2) are large. Therefore, even when the ball bearing 1 is used in a high-speed rotation range, the amount of the lubricating oil passing through the bearing space 4 is large, and it is possible to easily ensure the amount of the lubricating oil that lubricates the contact portions between the balls 5 and the inner ring raceway surface 9.

Due to the synergistic effect of the above actions, in the ball bearing 1 of this embodiment, the contact portions between the balls 5 and the inner ring raceway surface 9 can be effectively lubricated with the lubricating oil supplied from the outside of the bearing, and the starvation (depletion of lubricating oil inside the bearing) in a high-speed rotation range can be effectively prevented.

Furthermore, in the ball bearing 1 of this embodiment, the number of the balls 5 is small as illustrated in Fig. 1; therefore, the number of the cage claws 12 illustrated in Fig. 2 is small. Therefore, when the ball bearing 1 is used in a high-speed rotation range, it is possible to reduce deformation of the cage 6 in which the pairs of cage claws 12 are inclined radially outward by a centrifugal force.

That is, there is the following problem. When the cage 6 illustrated in Fig. 2 rotates at a high speed, a centrifugal force acts on each pair of cage claws 12 axially extending from the cage circular annular portion 11. Therefore, the cage circular annular portion 11 is torsionally deformed by the forces transmitted from the cage claws 12, and as a result, the entire cage 6 is deformed such that each pair of cage claws 12 are inclined radially outward. Furthermore, when the deformation of the cage 6 becomes large, the cage claws 12 interfere with the balls 5, and this could cause abnormal heat generation. In order to address the above problem, in this embodiment, , the number of the balls 5 and the number of the cage claws 12 are small as illustrated in Fig. 1; therefore, when the cage 6 illustrated in Fig. 2 rotates at a high speed, the total of the centrifugal forces acting on the plurality of pairs of cage claws 12 is small, and the torsional deformation of the cage circular annular portion 11 caused by the forces transmitted from the cage claws 12 is also small. Therefore, when the ball bearing 1 is used in a high-speed rotation range, it is possible to reduce deformation of the cage 6 in which the pairs of cage claws 12 are inclined radially outward by a centrifugal force.

In the ball bearing 1 of this embodiment, the oil passage gap 13 is formed at a position close to the inner ring raceway surface 9 (i.e., formed between the inner periphery of the cage circular annular portion 11 and the inner ring shoulder surface 10) as illustrated in Fig. 2; therefore, it is possible to effectively lubricate the contact portions between the balls 5 and the inner ring raceway surface 9.

In the ball bearing 1 of this embodiment, the side surfaces 18 of the cage circular annular portion 11 between the respective circumferentially adjacent pairs of pockets 15 are flat surfaces perpendicular to the axial direction as illustrated in Fig. 4; therefore, air existing in the spaces between the respective circumferentially adjacent pairs of balls 5 illustrated in Fig. 1 is less likely to be stirred by circumferential movement of the cage circular annular portion 11. Therefore, the lubricating oil existing in the bearing space 4 illustrated in Fig. 2 easily reaches the contact portions between the balls 5 and the inner ring raceway surface 9.

As illustrated in Fig. 3, in the ball bearing 1 of this embodiment, lubricating oil can be introduced into the oil passage grooves 16 in the inner surface of each pocket 15, and the lubricating oil can effectively lubricate the contact portions between the cage 6 and the balls 5.

As illustrated in Fig. 5, the ball bearing 1 of this embodiment is suitably used as a bearing that supports the rotor shaft 22 of the electric motor 20 for traveling an electric vehicle, or as a bearing that supports the intermediate shaft 28 or the input shaft 23 of the speed reducer 21, which reduces the rotation speed of the electric motor 20. That is, the bearing that supports the rotor shaft 22 or the bearing that supports the intermediate shaft 28 or the input shaft 23 of the speed reducer 21 rotates at a very high speed, but a load supported by the bearing itself is very small (for example, several percents or smaller) as compared with a basic dynamic rated load of a standard ball bearing; therefore, the number of the balls 5 can be reduced as illustrated in Fig. 1. Therefore, it is particularly suitable to use the ball bearing 1 according to this embodiment.

In the above embodiment, as the material of the cage 6, a resin composition in which a fiber-reinforced material is added to a resin material is used, but mild steel (SPC) may be used instead of the resin composition.

The above-described embodiment is a mere example in every respect, and the present invention is not limited thereto. The scope of the present invention is indicated by not the above description but the claims, and should be understood to include all modifications within the meaning and scope equivalent to the scope of the claims.

### DESCRIPTION OF REFERENCE NUMERALS

1: ball bearing
2: outer ring
3: inner ring
4: bearing space
5: ball
6: cage
7: outer ring raceway surface
9: inner ring raceway surface
10: inner ring shoulder surface
11: cage circular annular portion
12: cage claw
13: oil passage gap
15: pocket
16: oil passage groove
17: inter-pocket portion
18: side surface
20: electric motor
21: speed reducer
22: rotor shaft (rotary shaft)
23: input shaft (rotary shaft)
28: intermediate shaft (rotary shaft)
a: axial thickness
b: axial thickness
c: axial distance
O: center of the ball

## Claims

1. A ball bearing comprising:
an outer ring (2) having an outer ring raceway surface (7) on an inner periphery of the outer ring (2);
an inner ring (3) having an inner ring raceway surface (9) on an outer periphery of the inner ring (3);
a plurality of balls (5) disposed at circumferential intervals in an annular bearing space (4) defined between the outer ring (2) and the inner ring (3), the plurality of balls (5) being in rolling contact with the outer ring raceway surface (7) and the inner ring raceway surface (9); and
a cage (6) retaining the balls (5),
wherein the bearing space (4) communicates with an outside of the bearing such that a lubricating oil is introduced into the bearing space (4) from the outside of the bearing,
wherein the cage (6) includes:
a cage circular annular portion (11) circumferentially extending on a first axial side relative to the balls (5); and
a plurality of pairs of cage claws (12) extending from the cage circular annular portion (11) to a second axial side, and
wherein pockets (15) are formed between the respective pairs of cage claws (12) such that the balls (5) are received in the respective pockets (15),
**characterized in that** an axial thickness a (mm) of a portion (17) of the cage circular annular portion (11) connecting together ones of the cage claws (12) that are located between each circumferentially adjacent pair of the pockets (15) is set to satisfy a < c with respect to an axial distance c (mm) from a side surface (19) of the cage circular annular portion (11) on the first axial side to a center (O) of each of the balls (5),
wherein an inter-ball circumferential length ratio r defined as r = (dm×π÷Z)/Da is set to 2.6 or more and 11.4 or less, where a pitch circle diameter of the balls (5) is dm (mm), the number of the balls (5) is Z (pieces), and a diameter of each of the balls (5) is Da (mm).

2. The ball bearing according to claim 1, wherein the axial thickness a (mm) of the portion (17) of the cage circular annular portion (11) connecting together the ones of the cage claws (12) that are located between each circumferentially adjacent pair of the pockets (15) is set to satisfy a > b with respect to an axial thickness b (mm) of a portion of the cage circular annular portion (11) corresponding to a bottom of each of the pockets (15).

3. The ball bearing according to claim 1 or 2, wherein the inner ring (3) has, on the outer periphery of the inner ring (3), a cylindrical inner ring shoulder surface (10) that is axially adjacent to the inner ring raceway surface (9), and that is radially opposed to an inner periphery of the cage circular annular portion (11), and
wherein an annular oil passage gap (13) through which a lubricating oil passes is formed between the inner periphery of the cage circular annular portion (11) and the inner ring shoulder surface (10).

4. The ball bearing according to any one of claims 1 to 3, wherein the portion (17) of the cage circular annular portion (11) connecting together the ones of the cage claws (12) that are located between each circumferentially adjacent pair of the pockets (15) has, on the second axial side, a side surface (18) that is a flat surface perpendicular to an axial direction.

5. The ball bearing according to any one of claims 1 to 4, wherein each of the pockets (15) has, on an inner surface of the pocket (15), an oil passage groove (16) radially extending at an axial position corresponding to the center (O) of the ball (5).

6. The ball bearing according to any one of claims 1 to 5, wherein the axial thickness b (mm) of the portion of the cage circular annular portion (11) corresponding to the bottom of each of the pockets (15) is set to 1/62 or more and 1/26 or less of the pitch circle diameter dm (mm) of the balls (5).

7. The ball bearing according to any one of claims 1 to 6, wherein the axial thicknesses a (mm) of the portion (17) of the cage circular annular portion (11) connecting together the ones of the cage claws (12) that are located between each circumferentially adjacent pair of the pockets (15) is set to 1/70 or more and 1/30 or less of the pitch circle diameter dm (mm) of the balls (5).

8. The ball bearing according to any one of claims 1 to 7, wherein the cage (6) is formed of a resin composition in which a fiber-reinforced material is added to a resin material comprising one of a polyamide resin, a polyether ether ketone resin, and a polyphenylene sulfide resin.

9. The ball bearing according to any one of claims 1 to 7, wherein the cage (6) is formed of mild steel.

10. The ball bearing according to any one of claims 1 to 9, wherein the ball bearing is used as a bearing that supports a rotary shaft (22) of an electric motor (20) for traveling an electric vehicle or as a bearing that supports a rotary shaft (23, 28) of a speed reducer (21) configured to reduce rotation speed of the electric motor (20).
